# EUROPÄISCHE PATENTSCHRIFT

(11) **EP 2 555 848 B1**
(45) Veröffentlichungstag und Bekanntmachung des Hinweises auf die Patenterteilung: **04.06.2014**
(21) Anmeldenummer: 11712876.9
(22) Anmeldetag: 08.04.2011
(51) Int. Cl.: B01D 45/16, B01D 50/00, B04C 3/04

(54) **ZYKLONABSCHEIDER**
CYCLONE SEPARATOR
SÉPARATEUR À CYCLONE

(30) Priorität: 08.04.2010 DE 102010014278
(43) Veröffentlichungstag der Anmeldung: 13.02.2013
(73) Patentinhaber: Mann + Hummel GmbH, 71638 Ludwigsburg (DE)
(72) Erfinder: MENSSEN, Jörg, 71706 Markgröningen (DE)
(86) Internationale Anmeldenummer: PCT/EP2011/055494
(87) Internationale Veröffentlichungsnummer: WO 2011/124675

(56) Entgegenhaltungen:
- EP-A1- 0 558 091
- EP-A1- 1 500 423
- DE-A1- 2 807 386
- GB-A- 594 576

## Beschreibung

### Technisches Gebiet

Die Erfindung betrifft einen Zyklonabscheider, insbesondere einen Zyklonvorabscheider für einen Luftfilter einer Brennkraftmaschine, beispielsweise einen Vielzellenzyklon, gemäß dem Oberbegriff des Anspruchs 1.

### Stand der Technik

Ein Luftfilter, der mit einem als Vielzellenzyklon ausgebildeten Vorabscheider versehen ist, ist beispielsweise aus der Druckschrift DE 298 19 335 U1 sowie aus der Druckschrift DE 10 2008 011 186 A1 bekannt. Ferner ist in der Druckschrift DE 20 2006 015 231 U1 ein Zyklonabscheider gemäß dem Oberbegriff des Anspruchs 1 offenbart. Gemäß dem vorgenannten Stand der Technik sind das erste und das zweite Zyklonbauteil zwei separate Bauteile des Gehäuses des Zyklons. Diese beiden Gehäusebauteile sind an ihren jeweiligen abströmseitigen Enden miteinander verbunden. Beispielsweise können die beiden Zyklonbauteile, wie aus der Druckschrift DE 102 35 743 A1 bekannt, mittels einer Schnappverbindung miteinander verbunden sein.

Bei diesen bekannten Zyklonvorabscheidern ist es jedoch wichtig, dass die beiden Gehäusebauteile exakt zusammenpassen, da andernfalls das Gehäuse undicht ist, was die Leistung des Zyklonabscheiders stark herabsetzt. Um den gewünschten Vorabscheidegrad zu erzielen, dürfen bei der Fertigung der beiden Zyklonbauteile also nur sehr geringe Toleranzen auftreten.

Der Erfindung liegt die Aufgabe zugrunde, einen Zyklonabscheider der eingangs genannten Art so weiterzubilden, dass bei der Herstellung des ersten und zweiten Zyklonbauteils größere Fertigungstoleranzen zugelassen werden können, ohne dass die Leistung des Zyklonabscheiders dabei in Mitleidenschaft gezogen wird.

### Offenbarung der Erfindung

Diese Aufgabe wird durch einen Zyklonabscheider mit den im Anspruch 1 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Mithin basiert die vorliegende Erfindung darauf, dass im Verbindungsbereich des abströmseitigen Endes des Zellenrohrs und des abströmseitigen Endbereiches des Tauchrohrs mindestens ein Dichtelement angeordnet ist, das das Zellenrohr und das Tauchrohr dichtend miteinander verbindet.

Gemäß einer vorteilhaften Ausführungsform der vorliegenden Erfindung ist das Dichtelement im Verbindungsbereich zwischen dem abströmseitigen Ende des Zellenrohrs und einem am abströmseitigen Endbereich des Tauchrohrs angeordneten, sich im Wesentlichen radial zur Achsrichtung des Tauchrohrs erstreckenden Tauchrohrplateau angeordnet. Hierdurch wird die Dichtigkeit zwischen Zellenrohr und Tauchrohrplateau erhöht. Die Dichtigkeit zwischen Zellenrohr und Tauchrohrplateau spielt eine wichtige Rolle bei der Performance des Zyklonabscheiders.

Zur gezielten Ableitung der durch die Rotation abgeschiedenen Partikel zum Partikelauslass kann das Zellenrohr an seinem abströmseitigen Ende eine Ausnehmung aufweisen, deren abströmseitiges Ende mit Abstand zum abströmseitigen Endbereich des Tauchrohrs angeordnet ist. Bei diesem Ausführungsbeispiel kann das Dichtelement den gesamten Umfang des Bereichs des abströmseitigen Endes des Zellenrohrs und/oder den gesamten Umfang des Bereichs des abströmseitigen Endbereiches des Tauchrohrs umlaufen. Alternativ kann das Dichtelement aber auch ausschließlich an dem Bereich des Zellenrohrs angeordnet sein, der mit dem abströmseitigen Endbereich des Tauchrohrs verbunden ist und/oder ausschließlich an dem Bereich des Tauchrohrs angeordnet sein, der mit dem abströmseitigen Ende des Zellenrohrs verbunden ist.

Vorteilhafterweise ist der Zyklon als Vielzellenzyklon ausgebildet. Bei einem Vielzellenzyklon weist das erste Zyklonbauteil eine Vielzahl an Zellenrohren und das zweite Zyklonbauteil eine Vielzahl an Tauchrohren auf. Vorzugsweise ist jeweils an zumindest einem Bereich der abströmseitigen Enden der Zellenrohre und/oder jeweils an zumindest einem Bereich der abströmseitigen Endbereiche der Tauchrohre ein Dichtelement gemäß der vorstehend dargelegeten Art angeordnet.

Das Dichtelement kann lösbar an zumindest einem Bereich des abströmseitigen Endes des Zellenrohrs und /oder an zumindest einem Bereich des abströmseitigen Endbereiches des Tauchrohrs angeordnet sein. Dies hat den Vorteil, dass das Dichtelement einfach ausgetauscht werden kann.

Bei einem Vielzellenzyklon können die jeweiligen Dichtelemente beispielsweise nach Art einer Matte miteinander verbunden sein. Dies erleichtert das Anbringen und ggf. den Austausch der Dichtelemente.

Es ist aber auch möglich, das Dichtelement fest auf zumindest einen Bereich des abströmseitigen Endes des Zellenrohrs und /oder auf zumindest einen Bereich des abströmseitigen Endbereiches des Tauchrohrs aufzuspritzen. Das Aufspritzen des Dichtelements ist ein besonders effizientes Herstellungsverfahren für das Dichtelement.

Das Dichtelement ist vorzugsweise im Wesentlichen aus mindestens einem thermoplastischen Elastomer gebildet.

Besonders geeignet ist der erfindungsgemäße Zyklonabscheider als Vorabscheider für einen zweistufigen Abscheider, beispielsweise für einen Luftfilter einer Brennkraftmaschine. Beim Einsatz in einem zweistufigen Abscheider ist der Zyklonabscheider als Vorabscheider ausgebildet, wobei der Auslass des Tauchrohrs mit dem rohseitigen Einlass eines Filtergehäuses, in dem ein Primärfilterelement aufgenommen ist, verbunden ist.

### Kurze Beschreibung der Zeichnungen

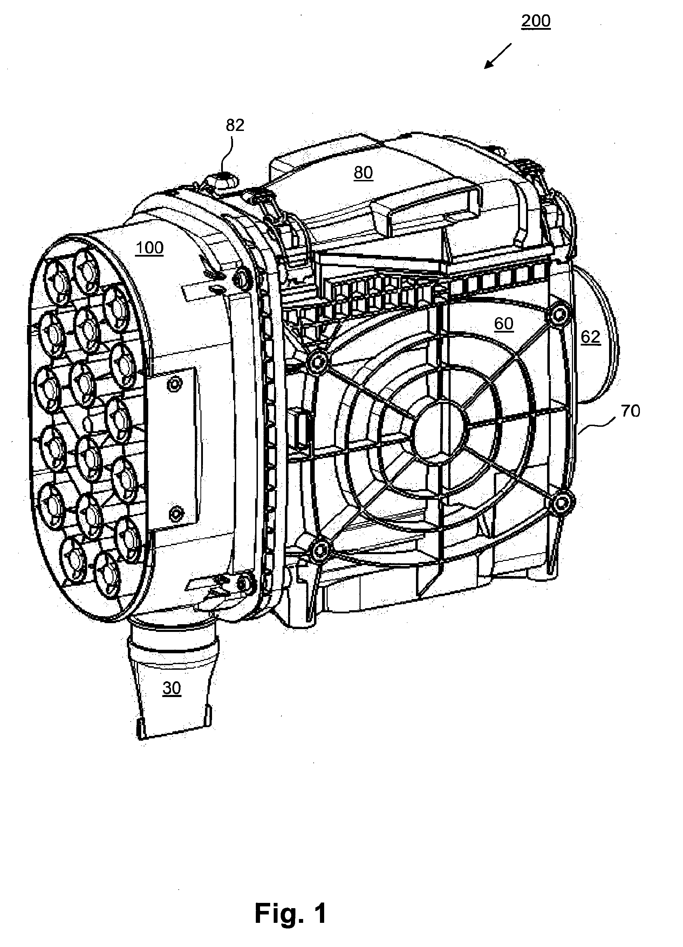

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand der durch die Figuren 1 bis 12 veranschaulichten beiden Ausführungsbeispiele näher erläutert.

Es zeigt:
- Figur 1: in perspektivischer Darstellung eine Filtervorrichtung mit einem ersten Ausführungsbeispiel für einen Zyklonabscheider gemäß der vorliegenden Erfindung, wobei das Dichtelement am ersten Zyklonbauteil angeordnet ist;
- Figur 2: eine Vorderansicht des ersten Zyklonbauteils des Zyklonabscheiders aus Figur 1;
- Figur 3: eine Rückansicht des ersten Zyklonbauteils des Zyklonabscheiders aus Figur 1;
- Figur 4: das erste Zyklonbauteil des Zyklonabscheiders aus Figur 1 beim Verbinden mit dem zugehörigen zweiten Zyklonbauteil;
- Figur 5: eine Detailansicht des Verbindungsbereichs des ersten und des zweiten Zyklonbauteils aus Figur 4;
- Figur 6: den Zyklonabscheider aus Figur 4 im zusammengebauten Zustand;
- Figur 7: eine Detailansicht des Verbindungsbereichs des ersten und des zweiten Zyklonbauteils des Zyklonabscheiders aus Figur 4 im zusammengebauten Zustand;
- Figur 8: eine Vorderansicht des zweiten Zyklonbauteils eines zweiten Ausführungsbeispiels für einen Zyklonabscheider gemäß der vorliegenden Erfindung, wobei das Dichtelement am zweiten Zyklonbauteil angeordnet ist;
- Figur 9: das zweite Zyklonbauteil des Zyklonabscheiders aus Figur 8 beim Verbinden mit einem ersten Zyklonbauteil;
- Figur 10: eine Detailansicht des Verbindungsbereichs des zweiten Zyklonbauteils aus Figur 9;
- Figur 11: den Zyklonabscheider aus Figur 9 im zusammengebauten Zustand; und
- Figur 12: eine Detailansicht des Verbindungsbereichs des ersten und des zweiten Zyklonbauteils des Zyklonabscheiders aus Figur 9 im zusammengebauten Zustand.

Gleiche oder ähnliche Ausgestaltungen, Elemente oder Merkmale sind in den Figuren 1 bis 12 mit identischen Bezugszeichen versehen.

### Ausführungsform(en) der Erfindung

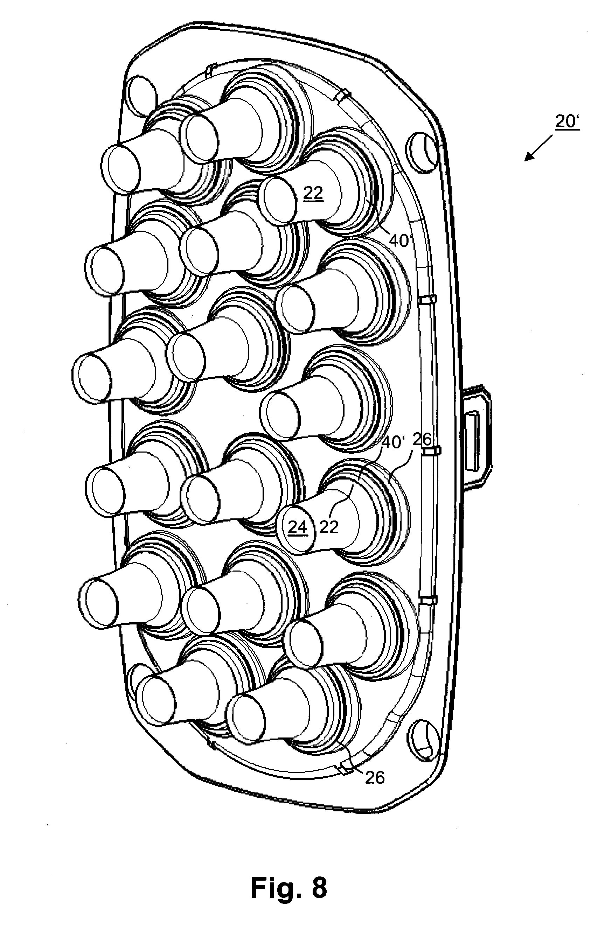

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf den in den Figuren 1 bis 7 dargestellten Zyklonabscheider 100 als auch auf den in den Figuren 8 bis 12 dargestellten Zyklonabscheider 100'.

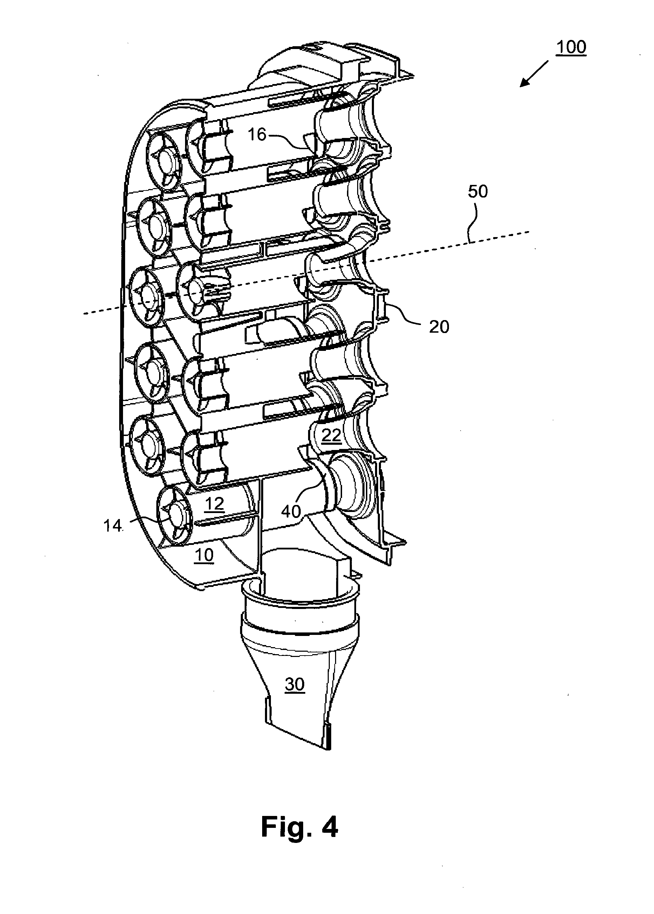

Bei der in Figur 1 dargestellten Filtereinrichtung 200 handelt es sich um einen Luftfilter für eine Brennkraftmaschine, bestehend aus einem Filtergehäuse 60, in welchem ein Hauptfilterelement aufgenommen ist, einem Zyklonvorabscheider 100 sowie einem nachgeschalteten Sekundärelement 70. Das Filtergehäuse 60 weist an seiner Umfangsseite eine Öffnung auf, die von einem über Verschlusselemente 82 lösbar angeordneten und verschließbaren Deckel 80 abgedeckt ist. Über diese Öffnung in der Mantelfläche des Filtergehäuses kann das Hauptfilterelement und zweckmäßigerweise auch das Sekundärelement 70 radial bzw. quer zur Achsrichtung 50 (vgl. Figuren 4, 6, 11) der beiden Zyklonbauteile 10, 20 in den Aufnahmeraum innerhalb des Filtergehäuses 60 eingesetzt bzw. aus diesem entnommen werden. Das Filtergehäuse 60 weist einen rohseitigen Einlass und einen reinseitigen Auslass 62 für zu filtrierende Medien auf.

Der Zyklonvorabscheider 100 ist im Bereich des Einlasses des Filtergehäuses 60 angeordnet. Im Zyklonvorabscheider 100 werden die Schmutzpartikel aus der axial herangeführten Luft durch die Fliehkraft in einem rotierenden Luftstrom nach außen getragen und abgeschieden. Über einen Partikelauslass 30, der nach unten gerichtet sein kann, können die Schmutzpartikel, welche im Zyklonvorabscheider 100 abgeschieden wurden, entfernt werden. Der Zyklonvorabscheider 100 ist als separates Bauteil ausgeführt, das mit dem Filtergehäuse 60 verbunden ist. Das im Zyklonvorabscheider 100 vorgefilterte Fluid wird axial der stirnseitigen Anströmseite des Hauptfilterelements zugeführt. Zyklonvorabscheider 100, Hauptfilterelement 60 und Sekundärelement 70 können axial hintereinander liegen und insbesondere ohne Umlenkung der zu reinigenden Verbrennungsluft in Achsrichtung durchströmt werden.

Zum Erzeugen des rotierenden Luftstroms weist der Zyklonvorabscheider 100 ein erstes Zyklonbauteil 10, nämlich ein mit dem Filtergehäuse verschraubtes Zyklonoberteil, und ein zweites Zyklonbauteil 20, nämlich ein zwischen dem Zyklonoberteil 10 und dem Filtergehäuse 60 verspanntes Zyklonunterteil, auf. Das Zyklonoberteil 10 des als Vielzellenzyklon ausgebildeten Zyklonvorabscheiders 100 hat eine Vielzahl an Zellenrohren 12 und das Zyklonunterteil ist als Tauchrohrplatte mit einer Vielzahl an Tauchrohren 22 ausgebildet.

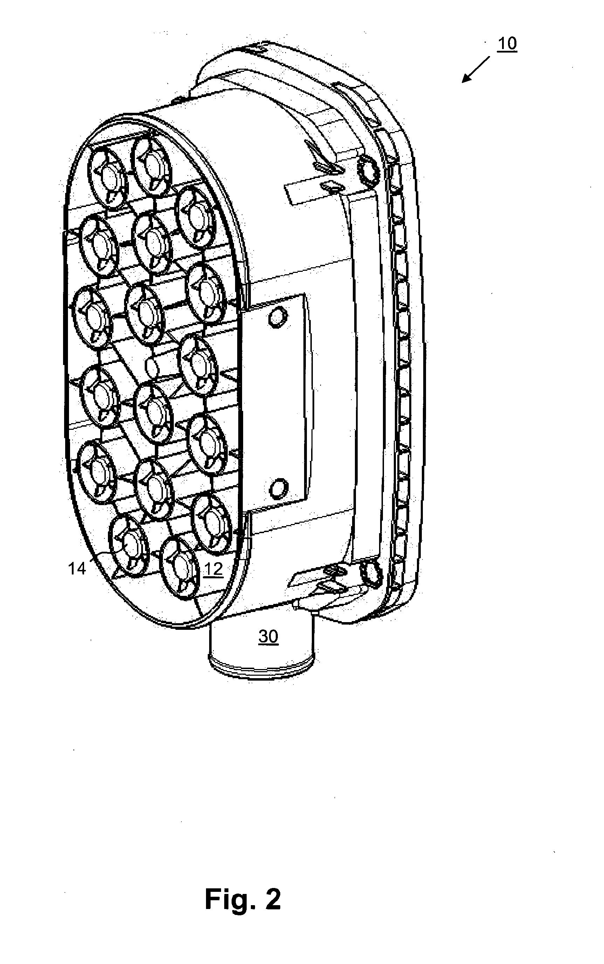

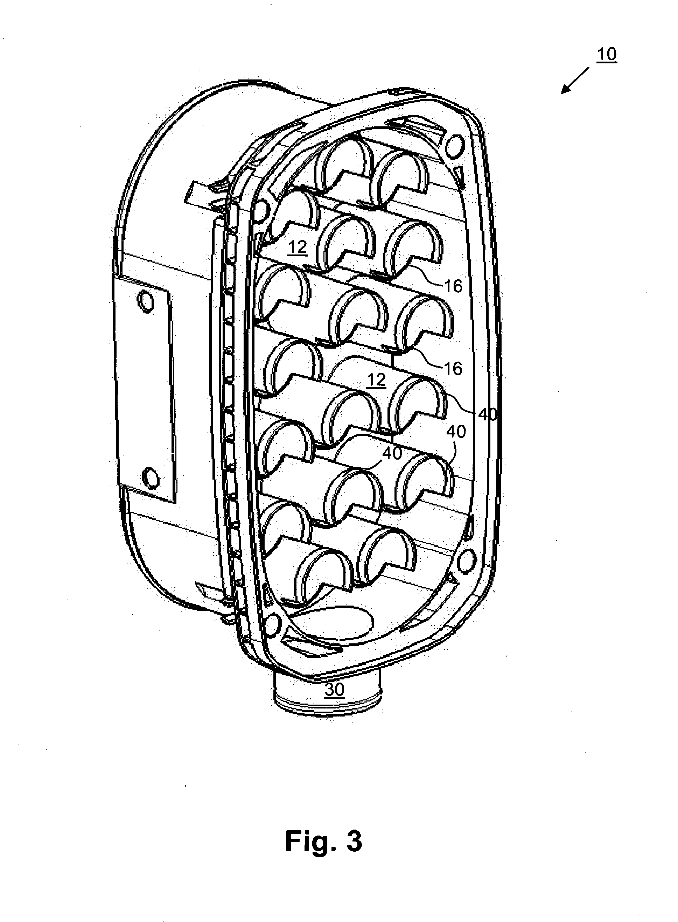

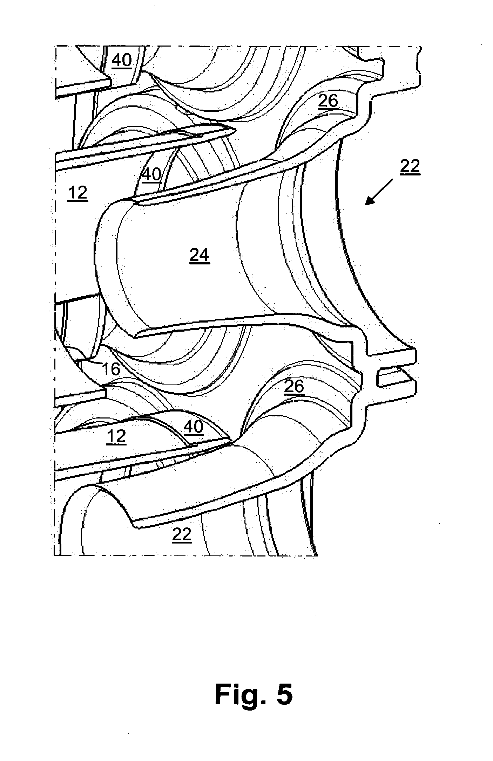

Figur 2 zeigt eine Vorderansicht und Figur 3 eine Rückansicht des Zyklonoberteils 10. Am abströmseitigen Ende der Zellenrohre 12 ist jeweils ein als Dichtlippe ausgebildetes Dichtelement 40 angeordnet. Diese Dichtlippe 40 ist dazu ausgebildet, die Zellenrohre 12 und die Tauchrohre 22 dichtend miteinander zu verbinden. Wie in den Figuren 3 und 5 zu sehen, kann die Dichtlippe 40 einen Teilbereich des abströmseitigen Endes der jeweiligen Zellenrohre 12 umlaufen. So sind die in den Figuren 3 und 5 dargestellten Dichtlippen 40 teilkreisförmig, insbesondere etwa entsprechend einem 2/3- bis 3/4-Kreis.

Zur gezielten Ableitung der durch die Rotation abgeschiedenen Partikel zum Partikelauslass 30 weisen die Zellenrohre 12 jeweils an einem dem Partikelauslass 30 zugewandeten Bereich ihres abströmseitigen Endes eine Ausnehmung auf. Der Endbereich 16 dieser Ausnehmung ist beim gezeigten Ausführungsbeispiel nicht abgedichtet und steht nicht mit dem abströmseitigen Endbereich des Tauchrohrs 22 in Kontakt.

Die Figuren 4 und 5 zeigen den Zyklonabscheider 100 aus Figur 1 in Explosionsdarstellung. Insbesondere Figur 5 ist zu entnehmen, dass nach dem Zusammenbauen des Zyklongehäuses, d. h. nach dem Verbinden des Zyklonoberteils 10 und des Zyklonunterteils 20, die am Zyklonoberteil angeordneten Dichtlippen 40 auf einem sich in radialer Richtung erstreckenden Plateau 26 des Tauchrohrs 22 aufliegen.

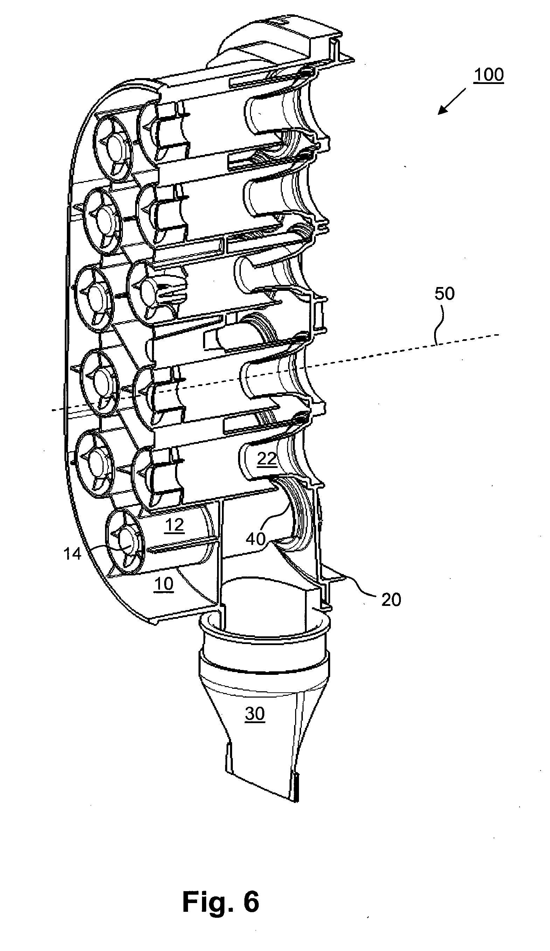

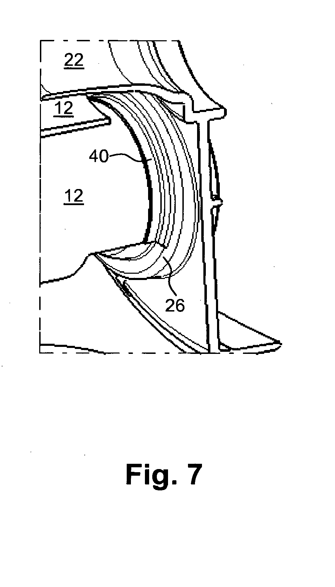

Die Figuren 6 und 7 zeigen den Zyklonabscheider 100 aus Figur 1 in zusammengebautem bzw. montiertem Zustand. Die Dichtlippen 40 sind fest mit den abströmseitigen Enden der Zellenrohre 12 und mit den abströmseitigen Endbereichen der Tauchrohre 22 verpresst.

Bei dem in den Figuren 8 bis 12 dargestellten zweiten Ausführungsbeispiel der vorliegenden Erfindung sind Dichtelemte 40' am Zyklonunterteil 20', genauer gesagt auf den jeweiligen Tauchrohrplateaus 26, angeordnet. Dabei umlaufen die Dichtelemente 40' die Tauchrohre 22.

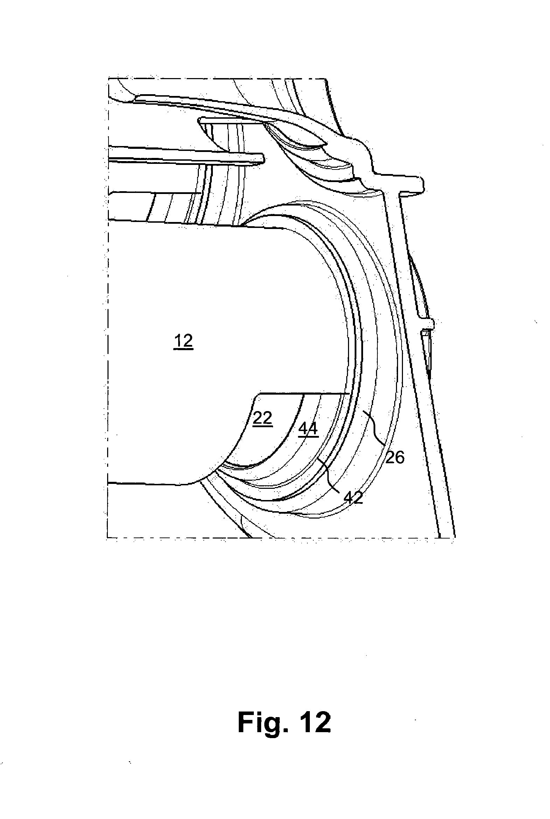

Wie Figur 8 zu entnehmen, weiten sich die Tauchrohre 22 in Strömungsrichtung des Gasstroms kegelförmig auf. Zum Abdichten des Verbindungsbereichs der abströmseitigen Enden des jeweiligen Zellenrohrs 12 und des jeweiligen Tauchrohrs 22 in Richtung der Achse 50 des Zellenrohrs 12 bzw. des Tauchrohrs 22 weisen die Dichtelemente 40' mindestens eine axiale Dichtfläche 42 auf. Ferner weisen die Dichtelemente 40' zum Abdichten des Verbindungsbereichs der abströmseitigen Enden des jeweiligen Zellenrohrs 12 und des jeweiligen Tauchrohrs 22 in Richtung des Radius des Zellenrohrs 12 bzw. des Tauchrohrs 22 mindestens eine radiale Dichtfläche 44 auf (vgl. Figur 12).

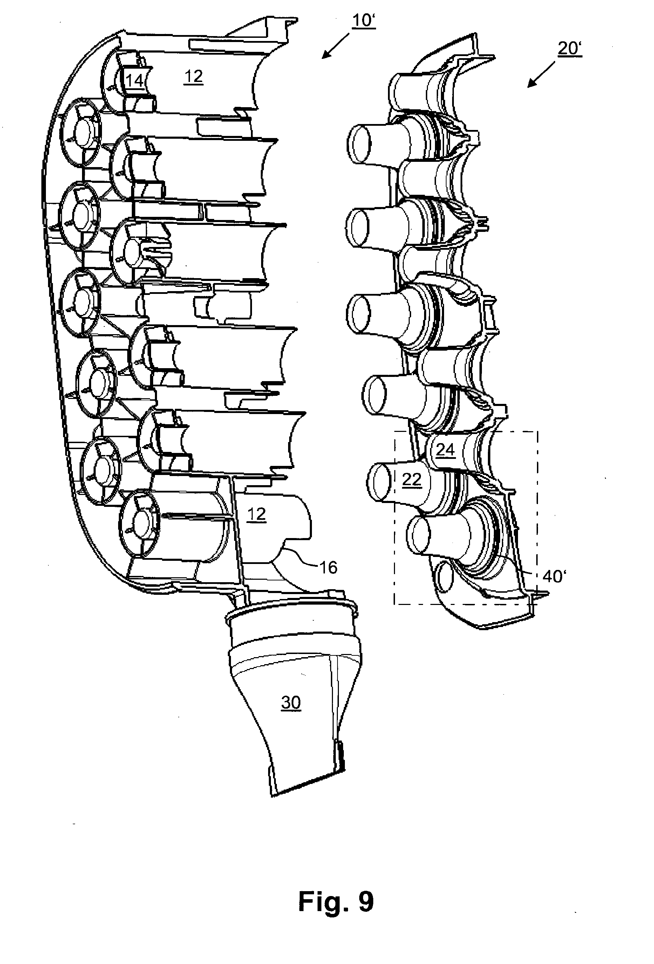

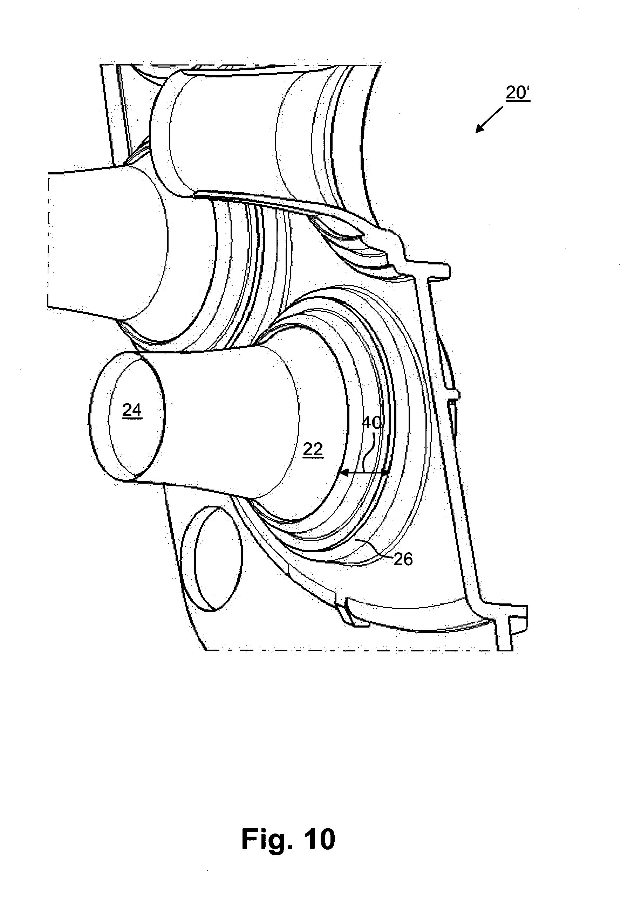

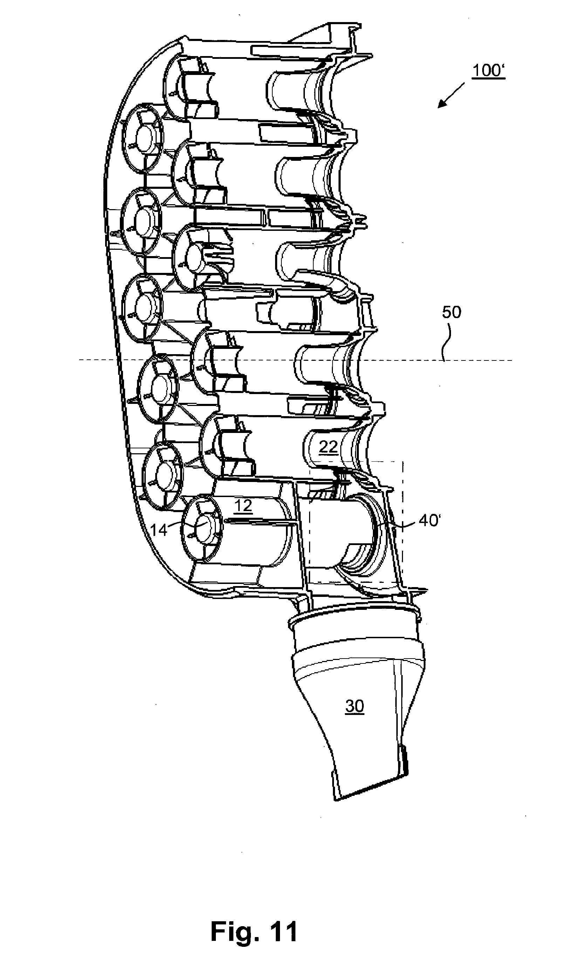

In den Figuren 9 und 10 ist der Zyklonvorabscheider 100' in Explosionsdarstellung gezeigt. Die axial-radialen Dichtflächen 42, 44 liegen auf den Tauchrohrplateaus 26 auf. Die Figuren 11 und 12 zeigen das Zyklonunterteil 20' mit den axial-radialen Dichtflächen 42, 44 in montiertem Zustand, wobei die Dichtflächen 42, 44 mit den Zellenrohren 12 und den Tauchrohren 22 verpresst sind.

Mittels der vorstehend beschriebenen Dichtelemente 40, 40' wird die Dichtigkeit der beiden Bauteile 10, 10', 20, 20' des Zyklonabscheiders 100, 100' sicher gewährleistet. Ferner können bei der Herstellung der beiden Zyklonbauteile 10, 10`, 20, 20' größere Fertigungstoleranzen zugelassen werden, ohne dass der (Vor)Abscheidegrad dabei stark in Mitleidenschaft gezogen wird.

## Patentansprüche

1. Zyklonabscheider (100; 100`) zum Abscheiden von flüssigen und/oder festen Partikeln aus einem Gasstrom, aufweisend
- ein erstes Zyklonbauteil (10; 10') mit mindestens einem im Wesentlichen zylindrisch ausgebildeten Zellenrohr (12), das eine Leitvorrichtung (14) aufweist, mittels derer der Gasstrom zum Abscheiden der Partikel in Rotation versetzt wird,
- einen Partikelauslass (30) zum Ableiten der abgeschiedenen Partikel und
- ein der Strömungsrichtung des Gasstrom folgendes zweites Zyklonbauteil (20; 20') mit mindestens einem Tauchrohr (22), wobei das Tauchrohr (22) im Zellenrohr (12) aufgenommenen ist, an seinem der Strömungsrichtung des Gasstroms folgenden abströmseitigen Ende mit dem der Strömungsrichtung des Gasstroms folgenden abströmseitigen Ende des Zellenrohrs (12) zumindest bereichsweise verbunden ist und einen zentralen Auslass (24) zum Auslassen des gereinigten Gasstroms aufweist, wobei im Verbindungsbereich des abströmseitigen Endes des Zellenrohrs (12) und des abströmseitigen Endbereiches des Tauchrohrs (22) mindestens ein Dichtelement (40; 40') angeordnet ist, welches das Zellenrohr (12) und das Tauchrohr (22) dichtend miteinander verbindet,
**dadurch gekennzeichnet, dass**
das Dichtelement (40; 40') im Wesentlichen aus mindestens einem elastischen Material, insbesondere einem thermoplastischen Elastomer oder Gummi gebildet ist.

2. Zyklonabscheider (100; 100') gemäß Anspruch 1, **dadurch gekennzeichnet, dass** das Tauchrohr (22) an seinem abströmseitigen Ende ein sich im Wesentlichen radial zur Achsrichtung des Tauchrohrs (22) erstreckendes Tauchrohrplateau (26) aufweist, wobei das Dichtelement (40; 40') zumindest einen Bereich des abströmseitigen Endes des Zellenrohrs (12) mit dem Tauchrohrplateau (26) dichtend verbindet.

3. Zyklonabscheider (100; 100') gemäß Anspruch 2, **dadurch gekennzeichnet, dass** das Dichtelement (40; 40')
- zum Abdichten des Verbindungsbereichs des Zellenrohrs (12) und des Tauchrohrs (22) mindestens eine in Richtung der Achse (50) des Zellenrohrs (12) bzw. in Richtung der Achse (50) des Tauchrohrs (22) verlaufende axiale Dichtfläche (42) und/oder
- zum Abdichten des Verbindungsbereichs der abströmseitigen Endes des Zellenrohrs (12) und des abströmseitigen Endbereichs des Tauchrohrs (22) mindestens eine in Richtung des Radius des Zellenrohrs (12) bzw. in Richtung des Radius des Tauchrohrs (22) verlaufende radiale Dichtfläche (44)
aufweist.

4. Zyklonabscheider (100; 100') gemäß mindestens einem der Ansprüche 1 bis 3, **dadurch gekennzeichnet, dass** das Dichtelement (40; 40') insbesondere lösbar an zumindest einem Bereich
- des abströmseitigen Endes des Zellenrohrs (12) und/oder
- des abströmseitigen Endbereiches des Tauchrohrs (22),
angeordnet ist.

5. Zyklonabscheider (100; 100') gemäß mindestens einem der Ansprüche 1 bis 3, **dadurch gekennzeichnet, dass** das Dichtelement (40; 40') auf zumindest einem Bereich
- des abströmseitigen Endes des Zellenrohrs (12) oder
- des abströmseitigen Endbereiches des Tauchrohrs (22), insbesondere auf zumindest einem Bereich des Tauchrohrplateaus (26), aufgespritzt ist.

6. Zyklonabscheider (100; 100') gemäß mindestens einem der Ansprüche 1 bis 5, **dadurch gekennzeichnet, dass** der Zyklonabscheider (100; 100') als Vielzellenzyklon ausgebildet ist, wobei das erste Zyklonbauteil (10; 10') eine Vielzahl an Zellenrohren (12) und das zweite Zyklonbauteil (20; 20') eine Vielzahl an Tauchrohren (22) aufweist und wobei das Dichtelement (40; 40') an jedem Zellenrohr (12) und/oder an jedem Tauchrohr (22) angeordnet ist.

7. Zyklonabscheider (100; 100`) gemäß Anspruch 6, **dadurch gekennzeichnet, dass** die jeweiligen Dichtelemente (40; 40') mattenartig miteinander verbunden sind.

8. Zyklonabscheider (100; 100') gemäß mindestens einem der Ansprüche 1 bis 7, **dadurch gekennzeichnet, dass** das Zellenrohr (12) zur gezielten Ableitung der durch die Rotation abgeschiedenen Partikel zum Partikelauslass (30) an seinem abströmseitigen Ende mindestens eine Ausnehmung aufweist, wobei das abströmseitige Ende (16) dieser Ausnehmung mit Abstand zum abströmseitigen Endbereich des Tauchrohrs (22) angeordnet ist.

9. Zyklonabscheider (100; 100`) gemäß mindestens einem der Ansprüche 1 bis 8, **dadurch gekennzeichnet, dass**
- der Zyklonabscheider (100; 100') als Vorabscheider ausgebildet ist und
- der zentrale Auslass (24) des Tauchrohrs mit dem rohseitigen Einlass eines Filtergehäuses (60), in dem ein Primärfilterelement aufgenommen ist, verbunden ist.

## Claims

1. Cyclone separator (100; 100') for separating liquid and/or solid particles from a gas flow, featuring:
- a first cyclone component (10; 10') with at least one essentially cylindrically designed cell pipe (12), which features a guide device (14) by means of which the gas flow is put into rotation for separating the particles,
- a particle outlet (30) for discharging separated particles, and
- a second cyclone component (20; 20') following the flow direction of the gas flow with at least one immersion tube (22), wherein the immersion tube (22) is accommodated in the cell pipe (12), connected at least in some areas at its outflow-sided end following the flow direction of the gas flow with the outflow-sided end of the cell pipe (12) following the flow direction of the gas flow, and features a central outlet (24) for discharging the purified gas flow, wherein in the connecting area of the outflow-sided end of the cell pipe (12) and the outflow-sided end portion of the immersion tube (22) at least one sealing element (40; 40') is disposed which sealingly connects the cell pipe (12) and the immersion tube (22) with each other,
**characterized in that**
the sealing element (40; 40') is substantially formed at least of one resilient material, in particular of a thermoplastic elastomer or rubber.

2. Cyclone separator (100; 100') according to claim 1, **characterized in that** the immersion tube (22) features at its outflow-sided end an immersion tube plateau (26) extending substantially radially in relation to the axial direction of the immersion tube (22), wherein the sealing element (40, 40') sealingly connects at least one area of the outflow-sided end of the cell pipe (12) with the immersion tube plateau (26).

3. Cyclone separator (100; 100') according to claim 2, **characterized in that** the sealing element 40; 40') features
- at least one sealing surface (42) extending axially in the direction of the axis (50) of the cell pipe (12) and in the direction of the axis (50) of the immersion tube (22), respectively, for sealing the connecting area of the cell pipe (12) and the immersion tube (22), and/or
- at least one sealing surface (44) extending radially in the direction of the radius of the cell pipe (12) and in the direction of the radius of the immersion tube (22), respectively, for sealing the connecting area of the outflow-sided end of the cell pipe (12) and the outflow-sided end portion of the immersion tube (22).

4. Cyclone separator (100; 100') according to at least one of the claims 1 to 3, **characterized in that** the sealing element (40; 40') is in particular detachably disposed on at least one area
- of the outflow-sided end of the cell pipe (12), and/or
- of the outflow-sided end portion of the immersion tube (22).
angeordnet ist.

5. Cyclone separator (100; 100') according to at least one of the claims 1 to 3, **characterized in that** the sealing element 40; 40') is sprayed on to at least one area
- of the outflow-sided end of the cell pipe (12), or
- of the outflow-sided end portion of the immersion tube (22), in particular to at least one area of the immersion tube plateau (26).

6. Cyclone separator (100; 100') according to at least one of the claims 1 to 5, **characterized in that** the cyclone separator (100; 100') is designed as multicell cyclone, wherein the first cyclone component (10; 10') features a plurality of cell pipes (12) and the second cyclone component (20; 20') a plurality of immersion tubes (22), and wherein the sealing element (40; 40') is disposed at each cell pipe (12) and/or at each immersion tube (22).

7. Cyclone separator (100: 100') according to claim 6, **characterized in that** the respective sealing elements (40; 40') are connected with each other in a matlike manner.

8. Cyclone separator (100; 100') according to at least one of the claims 1 to 7, **characterized in that** the cell pipe (12) features at least one recess at its outflow-sided end for a targeted discharge of the particles separated by the rotation to the particle outlet (30), wherein the outflow-sided end (16) of this recess is disposed spaced away from the outflow-sided end portion of the immersion tube (22).

9. Cyclone separator (100; 100') according to at least one of the claims 1 to 8, **characterized in that**
- the cyclone separator (100; 100') is designed as pre-separator, and
- the central outlet (24) of the immersion tube is connected with the raw-sided inlet of a filter housing (60) in which a primary filter element is accommodated.

## Revendications

1. Séparateur à cyclone (100 ; 100') destiné à séparer des particules liquides et/ou solides d'un flux gazeux, comprenant
- un premier élément cyclone (10 ; 10') comprenant au moins une cellule tubulaire (12) de forme essentiellement cylindrique qui présente un dispositif de guidage (14) au moyen duquel le flux gazeux est mis en rotation pour séparer les particules,
- une sortie de particules (30) pour l'évacuation des particules séparées et
- un deuxième élément cyclone (20 ; 20') suivant la direction d'écoulement du flux gazeux comprenant au moins un tube plongeur (22), le tube plongeur (22) étant logé dans la cellule tubulaire (12), étant relié, au moins par endroits, au niveau de son extrémité en aval suivant la direction d'écoulement du flux gazeux, à l'extrémité de la cellule tubulaire (12) en aval suivant la direction d'écoulement du flux gazeux et présentant une sortie centrale (24) pour faire couler le flux gazeux purifié, au moins un élément d'étanchéité (40 ; 40'), qui relie la cellule tubulaire (12) et le tube plongeur (22) l'une à l'autre de manière étanche, étant disposé dans la zone de jonction de l'extrémité en aval de la cellule tubulaire (12) et de la zone terminale en aval du tube plongeur (22),
**caractérisé en ce que**
l'élément d'étanchéité (40 ; 40') est essentiellement constitué d'au moins un matériau élastique, notamment d'un élastomère thermoplastique ou de caoutchouc.

2. Séparateur à cyclone (100 ; 100') selon la revendication 1, **caractérisé en ce que** le tube plongeur (22) présente au niveau de son extrémité en aval un plateau de tube plongeur (26) s'étendant essentiellement de façon radiale par rapport au sens axial du tube plongeur (22), l'élément d'étanchéité (40 ; 40') reliant de manière étanche au moins une zone de l'extrémité en aval de la cellule tubulaire (12) au plateau de tube plongeur (26).

3. Séparateur à cyclone (100 ; 100') selon la revendication 2, **caractérisé en ce que** l'élément d'étanchéité (40 ; 40') dispose
- pour étancher la zone de jonction de la cellule tubulaire (12) et du tube plongeur (22), d'au moins une surface d'étanchéité (42) évoluant de manière axiale en direction de l'axe (50) de la cellule tubulaire (12) resp. en direction de l'axe (50) du tube plongeur (22) et/ou
- pour étancher la zone de jonction de l'extrémité en aval du tube plongeur (12) et de la zone terminale en aval du tube plongeur (22), d'au moins une surface d'étanchéité (44) évoluant de manière radiale en direction du rayon de la cellule tubulaire (12) resp. en direction du rayon du tube plongeur (22).

4. Séparateur à cyclone (100 ; 100') selon au moins l'une des revendications 1 à 3, **caractérisé en ce que** l'élément d'étanchéité (40 ; 40') est disposé, en particulier de façon amovible, sur au moins une zone
- de l'extrémité en aval de la cellule tubulaire (12) et/ou
- de la zone terminale en aval du tube plongeur (22).
angeordnet ist.

5. Séparateur à cyclone (100 ; 100') selon au moins l'une des revendications 1 à 3, **caractérisé en ce que** l'élément d'étanchéité (40 ; 40') est injecté sur au moins une zone
- de l'extrémité en aval de la cellule tubulaire (12) ou
- de la zone terminale en aval du tube plongeur (22), notamment sur au moins une zone du plateau de tube plongeur (26).

6. Séparateur à cyclone (100 ; 100') selon au moins l'une des revendications 1 à 5, **caractérisé en ce que** le séparateur à cyclone (100 ; 100') est exécuté en tant que cyclone multicellulaire, le premier élément cyclone (10 ; 10') présentant un grand nombre de cellules tubulaires (12) et le deuxième élément cyclone (20 ; 20') présentant un grand nombre de tubes plongeurs (22) et l'élément d'étanchéité (40 ; 40') étant disposé sur chaque cellule tubulaire (12) et/ou sur chaque tube plongeur (22).

7. Séparateur à cyclone (100 ; 100') selon la revendication 6, **caractérisé en ce que** les éléments d'étanchéité respectifs (40 ; 40') sont reliés les uns aux autres en forme de natte.

8. Séparateur à cyclone (100 ; 100') selon au moins l'une des revendications 1 à 7, **caractérisé en ce que** la cellule tubulaire (12) comporte, en vue de l'évacuation ciblée des particules séparées sous l'effet de la rotation en direction de la sortie de particules (30), au moins un évidement au niveau de son extrémité en aval, l'extrémité en aval (16) de cet évidement étant disposée à distance de la zone terminale en aval du tube plongeur (22).

9. Séparateur à cyclone (100 ; 100') selon au moins l'une des revendications 1 à 8, **caractérisé en ce que**
- le séparateur à cyclone (100 ; 100') est exécuté en tant que pré-séparateur et que
- la sortie centrale (24) du tube plongeur est reliée à l'entrée côté brut d'un boîtier de filtre (60) dans lequel est intégré un élément filtrant primaire.
